# EUROPEAN PATENT SPECIFICATION

(11) **EP 2 180 752 B1**
(45) Date of publication and mention of the grant of the patent: **08.08.2012**
(21) Application number: 08291005.0
(22) Date of filing: 24.10.2008
(51) Int. Cl.: H04W 76/06

(54) **Method and system for disconnect procedure**
Verfahren und System für ein Trennungsverfahren
Procédé et système pour procédure de déconnexion

(43) Date of publication of application: 28.04.2010
(73) Proprietor: Motorola Mobility, Inc., Libertyville, IL 60048 (US)
(72) Inventor: Chisu, Daniel C., Mundelein, Illinois 60060 (US); Binzel, Charles P., Bristol, Wisconsin 53104 (US); Favre, Guillaume, Toulouse 31300 (FR); Smolinske, Jeffrey C., Schaumburg, Illinois 60173 (US)
(74) Representative: Cross, Rupert Edward Blount

(56) References cited:
- US-A1- 2004 185 855
- US-A1- 2008 232 303

## Description

### 1. Field of the Invention

The claimed subject matter concerns disconnect procedures, and more particularly, methods for improving such procedures.

### 2. Description of the Related Art

For a Global System for Mobile Communications (GSM) voice call, both downlink (DL) and uplink (UL) channels exist. The DL channel involves transmissions from a base station to a mobile unit, while the UL channel refers to transmissions from the mobile unit to the base station. Sometimes, the DL transmission may fail during a GSM voice call, although the UL transmission may continue to operate during the call. A timeout procedure has been implemented in GSM mobile units such that the mobile unit will discontinue transmitting over the UL channel after the mobile unit positively determines that the DL channel has failed. As a consequence of this transmission stoppage, the base station, which has its own timeout procedure, will subsequently determine that the transmission over the UL channel has ceased. As a result, the overall time it takes for the base station to detect the failure includes the amount of time spent for the timeout procedure at the mobile unit in addition to the duration of the timeout at the base station. Thus, there is a significant delay before users involved in the call are notified of the dropped call and before the network resources are reallocated. This drawback may apply if there is a problem with transmission over the UL channel, too.

US patent application publication no. US 2008/0232303 describes an IP mobile communication system and base station which includes a mobile communication that is capable of rapidly disconnection a session if one of two terminal in communication with each other moves out of a communication area. The system includes a bases station connected to an exchange apparatus and connectable to a client terminal. The base station comprises a detector configured to detect that the client terminal cannot make radio connection with the base station and a notifying unit configured to transmit a disconnection request to the exchange apparatus if the detector detects that the client terminal cannot make radio connection with the base station. The mobile communication exchange generates a BYE message, sends the generated BYE message to the SIP client and ends a session.

### SUMMARY OF THE INVENTION

In accordance with the present invention, there is provided a method for a disconnect procedure and a mobile unit as recited in the accompanying claims.

The method can include the step of - during a call at a mobile unit operating in accordance with the GSM standard - detecting a DL channel failure between the mobile unit and a base station. The method can also include the step of - in response to the DL channel failure detection - signaling the base station from the mobile unit with a disconnect message. The disconnect message can be configured to prevent the base station from unnecessarily undergoing a base station timeout procedure.

The method can also include the steps of - at the mobile unit - monitoring one or more bursts of a slow associated control channel (SACCH) block in the DL channel, and based on this monitoring, predicting whether the SACCH block will be successfully decoded at the mobile unit. If the prediction shows that the SACCH block will not be successfully decoded, the base station can be signaled with a prediction disconnect message in addition to the disconnect message. As an example, the disconnect message can be a Layer 2 disconnect message that the mobile unit sends to the base station after the final burst of the SACCH block, and the prediction disconnect message can be a Layer 3 disconnect message that the mobile unit sends to the base station prior to the final burst of the SACCH block. As another example, the SACCH block can be the last SACCH block of a sequence of SACCH blocks that have failed to decode successfully.

In another arrangement, if the prediction shows that the SACCH block will be successfully decoded, then the mobile unit may not send the prediction disconnect message. If, however, the SACCH block is unsuccessfully decoded following the prediction that the SACCH block was to be successfully decoded, the mobile unit can send the disconnect message to the base station. This disconnect message can be a Layer 2 disconnect message.

In yet another arrangement, if the prediction shows that the SACCH block will not be successfully decoded, the base station can be signaled with multiple disconnect messages in which the disconnect messages can be Layer 2 disconnect messages or Layer 3 disconnect messages. For example, a first Layer 2 disconnect message or a first Layer 3 disconnect message can be transmitted by the mobile unit prior to the last burst in the SACCH block, and a second Layer 2 disconnect message or a second Layer 3 disconnect message can be transmitted by the mobile unit after the last burst in the SACCH block.

Another method for a disconnect procedure is described herein. The method can include the step of - at a base station communicating with a mobile unit operating in accordance with the GSM standard and wherein a failure in a DL channel between the mobile unit and the base station is detected - receiving a disconnect message from the mobile unit. The method can also include the steps of - in response to the receipt of the disconnect message - bypassing a timeout procedure that is normally initiated when the mobile unit ceases transmission over the downlink channel and tearing down the communication between the mobile unit and the base station for reallocation. As noted above, the disconnect message can be a Layer 2 disconnect message. Moreover, the base station can receiver a Layer 3 disconnect message in addition to the Layer 2 disconnect message.

A mobile unit that operates in accordance with the GSM standard is also described herein. The mobile unit can include a counter that can be configured to determine that a DL channel failure has occurred during a call between the mobile unit and a base station. The mobile unit can also include a processor that is coupled to the counter, and the processor is operable to - in response to the DL channel failure detection by the counter - generate a disconnect message to be transmitted to the base station that may inform the base station of the downlink channel failure such that the base station may avoid undergoing a timeout procedure.

The mobile unit may also contain a prediction engine that is coupled to the processor and is operable to monitor one or more bursts of a SACCH block in the DL channel. Based on the monitoring, the prediction engine can predict whether the SACCH block may be successfully decoded by the mobile unit. The processor can be further operable to generate a prediction disconnect message in addition to the disconnect message if the prediction engine predicts that the SACCH block may not be successfully decoded.

The mobile unit may also include a transceiver that can be coupled to the processor. As an example, the disconnect message can be a Layer 2 disconnect message that the transceiver transmits to the base station following the last burst in the SACCH block. As another example, the prediction disconnect message can be a Layer 3 disconnect message that the transceiver transmits to the base station prior to the last burst in the SACCH block. The SACCH block may be the last SACCH block of a number of SACCH blocks that have not been successfully decoded by the mobile unit.

In another arrangement, if the prediction engine predicts that the SACCH block may be successfully decoded, the processor may not generate the prediction disconnect message. If, however, the SACCH block is unsuccessfully decoded and the prediction engine makes an incorrect prediction, the processor may generate the disconnect message for transmission to the base station.

In another embodiment, if the prediction shows that the SACCH will not be successfully decoded, the prediction engine can signal the processor to generate multiple disconnect messages for transmission to the base station. As explained above, the disconnect messages can be Layer 2 disconnect messages or Layer 3 disconnect messages. In addition, the transceiver may transmit to the base station a first Layer 2 disconnect message or a first Layer 3 disconnect message before the last burst in the SACCH block and a second Layer 2 disconnect message or a second Layer 3 disconnect message after the last burst in the SACCH block.

A mobile unit that communicates with a base station is also described herein. The mobile unit can include a transceiver that can transmit signals to and receive signals from a base station and a counter that can detect a pending channel failure between the mobile unit and the base station. The mobile unit can also include a prediction engine that can monitor bursts between the mobile unit and the base station and can predict whether a multi-frame containing the bursts will be successfully decoded. The mobile unit can also include a processor that can be coupled to the transceiver, the counter and the prediction engine.

The processor can be operable to receive a pending channel failure detection signal from the counter and based on the prediction engine predicting an unsuccessful decoding of the multi-frame, generate a prediction disconnect message to be sent to the base station through the transceiver. The prediction disconnect message may enable the base station to bypass a timeout procedure, thereby reducing the amount of time before a connection between the base station and the mobile unit is torn down. As an example, the prediction disconnect message is a Layer 3 disconnect message.

The processor can also be operable to generate a second disconnect message to be transmitted to the base station after the transmission of the prediction disconnect message. As an example, the second disconnect message can be a Layer 2 disconnect message. As another example, the mobile unit may operate in accordance with the GSM standard.

### BRIEF DESCRIPTION OF THE DRAWINGS

Features that are believed to be novel are set forth with particularity in the appended claims. The claimed subject matter may best be understood by reference to the following description, taken in conjunction with the accompanying drawings, in the several figures of which like reference numerals identify like elements, and in which:
FIG. 1 illustrates an example of a communication network;
FIG. 2 illustrates an example of a mobile unit that can operate in the communication network of FIG. 1;
FIG. 3 illustrates an example of a method for a disconnect procedure; and
FIG. 4 shows a sequence of SACCH blocks and an example of a single SACCH block.

### DETAILED DESCRIPTION

As required, detailed embodiments of the claimed subject matter are disclosed herein; however, it is to be understood that the disclosed embodiments are merely exemplary and can be embodied in various forms. Therefore, specific structural and functional details disclosed herein are not to be interpreted as limiting, but merely as a basis for the claims and as a representative basis for teaching one skilled in the art to variously employ the claimed subject matter in virtually any appropriately detailed structure. Further, the terms and phrases used herein are not intended to be limiting but rather to provide an understandable description.

The terms "a" or "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The term "coupled" as used herein, is defined as connected, although not necessarily directly or physically, and not necessarily mechanically.

The term "transceiver" can be defined as any component or group of components that is capable of transmitting and/or receiving wireless or wired communications signals. The term "processor" can mean any component or group of components, including any suitable combination of hardware and software, that is capable of carrying out any of the processes described herein. A "base station" can be defined as any component or group of components that make up at least part of the infrastructure of a network, whether wireless or wired. A "mobile unit" can mean any portable device that can communicate with a base station. In addition, a "downlink channel" can mean a channel over which signals are sent from a base station to a mobile unit. A "downlink channel failure" can refer to any interruption or disruption of a communication on a downlink channel that may lead to the discontinuation of the communication on the downlink channel.

A method and system for a disconnect procedure is described herein. In one arrangement, the method can include the step of - during a call at a mobile unit operating in accordance with the GSM standard - detecting a DL channel failure between the mobile unit and a base station. The method can also include the step of - in response to the DL channel failure detection - signaling the base station from the mobile unit with a disconnect message. The disconnect message can be configured to prevent the base station from unnecessarily undergoing a base station timeout procedure. The method can also include the steps of - at the mobile unit - monitoring one or more bursts of a SACCH block in the DL channel and based on this monitoring, predicting whether the SACCH block will be successfully decoded at the mobile unit. If the prediction shows that the SACCH block will not be successfully decoded, the method can further include the step of signaling the base station with a prediction disconnect message in addition to the disconnect message. This process can reduce the amount of time that a caller may learn of the failure and the amount of time before network resources can be reallocated.

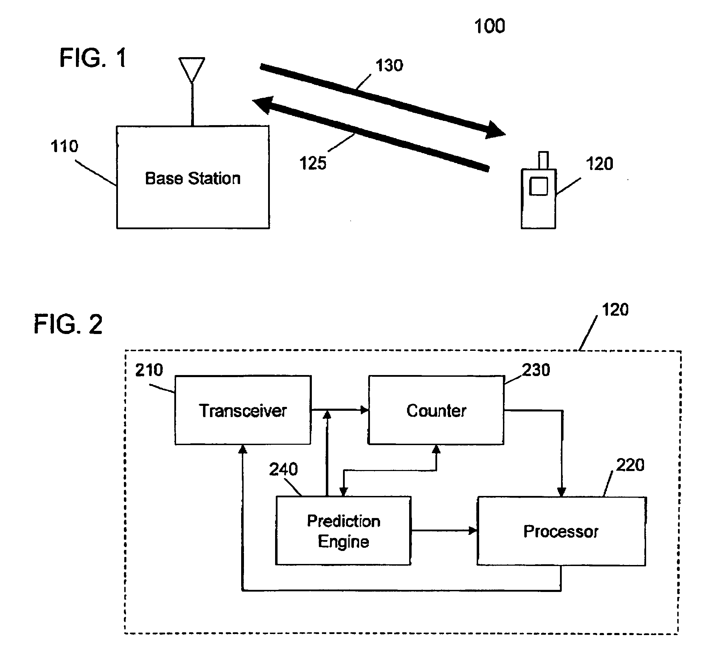

Referring to FIG. 1, a communication network 100 is shown in which a base station 110 is communicating with a mobile unit 120. As part of this network 100, signals transmitted from the mobile unit 120 to the base station 110 can be ferried over an uplink (UL) channel 125, while signals from the base station 110 to the mobile unit 120 can be sent over a DL channel 130. As an example, the base station 110 and the mobile unit 120 can be operated in accordance with the GSM standard, although it must be stressed that the network 100 is not so limited. Moreover, the network 100 is not limited to being a wireless communications network, as the principles explained here may also apply to a wired network. Any suitable type of information can be exchanged between the base station 110 and the mobile unit 120, including voice and data. To explain the claimed subject matter, an example will be presented here in which the mobile unit 120 is conducting a voice call with another mobile unit (not shown) via the base station 110.

Referring to FIG. 2, a block diagram of an example of a mobile unit 120 is shown. In one arrangement, the mobile unit 120 can include a transceiver 210 for transmitting signals to and receiving signals from the base station 110 and a processor 220 coupled to the transceiver 210. Some of the operations or functions that the processor 220 may execute will be explained below. The mobile unit 120 may also include a counter 230 and a prediction engine 240, both of which may be coupled to the processor 220. Although shown as discrete components, one or both of the counter 230 and the prediction engine 240 may also be considered part of the processor 220. The term "counter" can be described as any component or combination of components made up of any suitable combination of hardware and/or software that is capable of detecting any type of channel failures.

In one arrangement, the counter 230 may monitor signals received at the transceiver 210 from the base station 110 and can detect a DL channel failure, which may include a pending DL channel failure. Once an actual or pending failure is detected, the counter can signal the processor 220 and, optionally, signal the prediction engine 240. In response, the processor 220 can generate a disconnect message, and the transceiver 210 can transmit the disconnect message to the base station 110. As an alternative, the prediction engine 240 can predict whether a failure may occur and can signal the processor 220 to generate a prediction disconnect message. The transceiver 210 can then signal the base station 110 with the prediction disconnect message. As an example, this prediction disconnect message can be sent in addition to the disconnect message.

Once the base station 110 receives one or both of these messages, the base station 110 can terminate the communication between it and the mobile unit 120 and can reallocate the channel. As such, if a problem with the DL channel exists, the base station 110 does not have to wait for the mobile unit 120 to cease transmission and wait for its timeout procedure to be completed before it can carry out the reallocation.

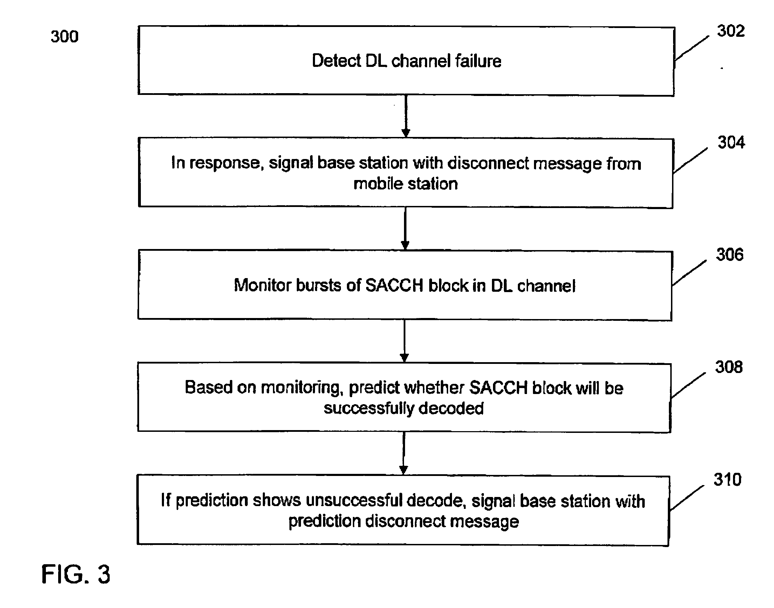

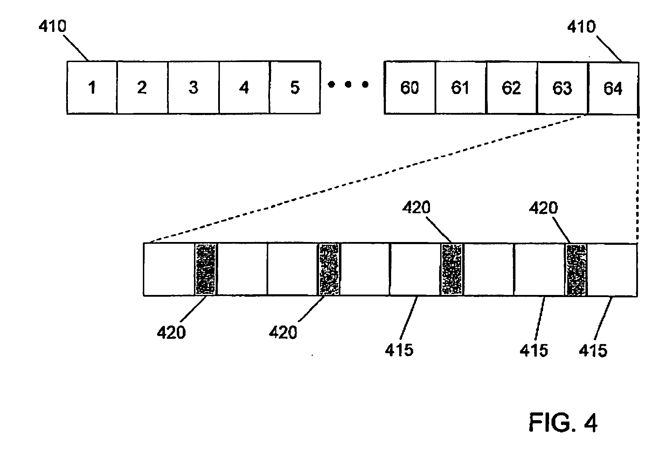

Referring to FIG. 3, a method 300 for a disconnect procedure is shown. To describe this method 300, reference will be made to FIGS. 1 and 2, although it is understood that the method 300 can be practiced in any other suitable system using any other suitable components. Reference will also be made to FIG. 4, which shows a sequence of SACCH blocks and a single SACCH block. Again, the method 300 is not necessarily limited to these particular elements, as the method 300 may apply to other suitable arrangements. Moreover, the steps of the method 300 are not limited to the particular order in which they are presented in the figure. Also, the method 300 can have a greater number of steps or a fewer number of steps than those shown in the figure.

At step 302, a DL channel failure can be detected between a mobile unit and a base station, and at step 304, in response to the failure detection, the mobile unit can signal the base station with a disconnect message. For example, the mobile unit 120 can be conducting a voice call with the base station 110, and the DL channel may experience some trouble. In particular, propagation conditions may be poor or high interference levels may be present, which affect the quality of the connection.

As is known in the art, the GSM protocol describes multi-frames that carry traffic and control signals to be exchanged between a mobile unit and a base station. These multi-frames may be referred to as SACCH blocks. The counter 230, as is also known in the art, will begin decrementing a value each time a SACCH block is not correctly received by the mobile unit 120. When this value reaches a minimum threshold, the counter 230 can signal the processor 220, and this signal is an indication that the counter 230 has detected a DL channel failure, which triggers a radio link timeout. In response, the processor 220 can generate, for example, a Layer 2 disconnect message or a Layer 3 disconnect message, which can be forwarded to the base station 110.

Once it receives the disconnect message, the base station 110 may bypass its timeout procedure that is normally initiated when the mobile unit 120 ceases transmission over the DL channel (The mobile unit 120 typically stops transmitting when the value reaches the minimum threshold.). As such, in view of the received disconnect message, the base station 110 can tear down the communication between the base station 110 and the mobile unit 120 and reallocate the resources.

Referring to FIG. 4, a sequence or a number of SACCH blocks 410 are shown. As an example, the failure of sixty-three of the SACCH blocks 410 to successfully decode may cause the counter 230 to decrement the value to the minimum threshold, which can trigger the generation of the disconnect message by the processor 220. An expansion of a single SACCH block 410 is also shown in FIG. 4. As those of skill in the art understand, the SACCH block 410 may include several traffic channel blocks 415, in between which are dispersed a number of SACCH bursts 420. In this example, there are four SACCH bursts 420 in each SACCH block 410.

In one arrangement, when the disconnect message is generated, it can be interleaved over several traffic channel blocks 415 for transmission to the base station 110. In one particular arrangement, the disconnect message can be interleaved over traffic channel blocks 415 that follow the last SACCH burst 420 in the last SACCH block 410 of the sequence of unsuccessfully decoded SACCH blocks 410. As noted earlier, this disconnect message may be a Layer 2 disconnect message or even a Layer 3 disconnect message. Either disconnect message can be used by the base station 110 to discontinue the communication between the base station 110 and the mobile unit 120.

Referring back to FIG. 3, there may be an optional procedure to follow. Specifically, at step 306, one or more bursts of a SACCH block in the DL channel may be monitored at the mobile unit. At step 308, based on this monitoring, whether the SACCH block will be successfully decoded at the mobile unit can be predicted. If this prediction shows that the SACCH block will not be successfully decoded, then the base station can be signaled with a prediction disconnect message in addition to the disconnect message, as shown at step 310.

For example, referring to FIGs. 1 and 2 again, the counter 230 can determine that the value used for detecting a channel failure is getting close to the minimum threshold described above. In response, the counter 230 can signal the prediction engine 240 to begin monitoring the SACCH bursts 420 of a SACCH block 410. In one particular example, the prediction engine 240 can monitor the first three SACCH bursts 420 of the last SACCH block 410 of the sequence of unsuccessfully decoded SACCH blocks 410. If the last SACCH block 410 of this sequence were to not be successfully decoded, then this condition would indicate a DL channel failure. Based on this monitoring process, the prediction engine 240 can determine whether this last SACCH block 410 will be successfully decoded at the mobile unit 120. If it appears that it will not be successfully decoded, then the prediction engine 240 can signal the processor 220 (directly or through the counter 230), and the processor 220 can generate a prediction disconnect message to be forwarded to the base station 110. If the prediction shows that the last SACCH block 410 will be successfully decoded, then the prediction disconnect message does not have to be generated.

As an example, the prediction disconnect message may be a Layer 3 disconnect message that can be transmitted prior to the final SACCH burst 420. The Layer 3 disconnect message may also be interleaved in traffic channel blocks that precede the last SACCH burst 420. Thus, in this example, the Layer 3 disconnect message may be sent to the base station 110 first, followed by the Layer 2 disconnect message. As those skilled in the art will appreciate, the Layer 3 disconnect message may provide additional information to the base station 110 as to the cause of the DL channel failure, as opposed to a Layer 2 disconnect message.

In view of the above description, it is understood that the term "detecting a downlink channel failure" may refer to both an actual detection that the last SACCH block will not be successfully decoded as well as a prediction that the last SACCH block will or may not be successfully decoded. Moreover, the term "successfully decoded" can refer to any suitable threshold for determining whether a relevant portion of data (e.g., a SACCH block) can be processed to provide useful information.

In the example described above, a Layer 3 disconnect message can serve as a prediction disconnect message, which may be generated and transmitted prior to the last SACCH burst 420, and a Layer 2 disconnect message can be the disconnect message, which may be produced and sent following the final burst 420. It must be stressed, however, that the invention it not so limited. For example, if the prediction aspect is employed, then the mobile unit 120 may simply transmit multiple disconnect messages of the same type, like two Layer 2 disconnect messages or two Layer 3 disconnect messages. In these examples, one of the disconnect messages may be transmitted prior to the last SACCH burst 420, while the other can be sent after the last SACCH burst 420. Alternatively, a Layer 2 disconnect message may be sent that contains Layer 3 information, such that it appears that a Layer 2 and a Layer 3 disconnect message are sent simultaneously. This hybrid Layer 2/Layer 3 message may also serve as a prediction disconnect message, if so desired.

As noted earlier, if the prediction shows that the relevant SACCH block 410 will be successfully decoded, then it is not necessary for a prediction disconnect message to be generated. There may be certain times, however, when the prediction is incorrect, and it turns out that the SACCH block 410 could not - in fact - be successfully decoded. Such a determination could be learned following the attempted processing of the last SACCH burst 420 of this SACCH block 410. In this case, the counter 230 may signal the processor 220, which can still generate a disconnect message to be sent to the base station 110. This disconnect message may be either a Layer 2 or a Layer 3 disconnect message.

Although the above description presents examples of how downlink channel failures can be detected in the physical layer through the use of a radio link timeout procedure, the claimed subject matter is not so limited. As those of skill in the art will appreciate, there are other events that may indicate a downlink channel failure that can lead to the generation of a disconnect message to prevent the base station 110 from unnecessarily undergoing a timeout procedure. In particular, any signaling failure detection mechanism in Layer 2 (data link layer) can be employed for such purpose. For example, the T200/N200 timer/counter common in many GSM systems can be used to cause the mobile station 120 to signal the base station 110 with a disconnect message. In this example, the disconnect message can be a Layer 2 disconnect message.

While the various embodiments of the present invention have been illustrated and described, it will be clear that the claimed subject matter is not so limited. Numerous modifications, changes, variations, substitutions and equivalents will occur to those skilled in the art without departing from the scope of the present invention as defined by the appended claims.

## Claims

1. A method for a disconnect procedure, comprising:
during a call at a mobile unit (120), the mobile unit (120) detecting (302) a downlink channel failure between the mobile unit (120) and a base station (110);
in response to the downlink channel failure detection, the mobile unit (120) signaling the base station (110) with a disconnect message, wherein the disconnect message is configured to inform the base station (110) of the downlink channel failure such that the base station (110) can detect the downlink channel failure while avoiding undergoing a base station timeout procedure.

2. The method of claim 1, further comprising:
at the mobile unit (120), monitoring (306) one or more bursts (420) of a slow associated control channel (SACCH) block (410) in the downlink channel;
based on this monitoring, predicting (308) whether the SACCH block will be successfully decoded at the mobile unit (120); and
if the prediction shows that the SACCH block will not be successfully decoded, signaling (310) the base station (110) with a prediction disconnect message in addition to the disconnect message.

3. The method of claim 2, wherein the disconnect message is a Layer 2 disconnect message that the mobile unit (120) sends to the base station (110) after the final burst (420) of the SACCH block (410) and the prediction disconnect message is a Layer 3 disconnect message that the mobile unit (120) sends to the base station (110) prior to the final burst (420) of the SACCH block (410) and wherein the mobile unit (120) operates in accordance with the Global System for Mobile Communications (GSM) standard.

4. The method of claim 3, wherein the SACCH block is the last SACCH block of a sequence of SACCH blocks that have failed to decode successfully.

5. The method of claim 2, wherein if the prediction shows that the SACCH block will be successfully decoded, then the mobile unit (120) will not send the prediction disconnect message, wherein if the SACCH block is in fact unsuccessfully decoded following the prediction that the SACCH block was to be successfully decoded, the mobile unit (120) sends the disconnect message to the base station (110).

6. The method of claim 5, wherein the disconnect message is a Layer 2 disconnect message.

7. The method of claim 1, further comprising:
at the mobile unit (120), monitoring (306) one or more bursts (420) in a SACCH block (410) in the downlink channel;
based on this monitoring, predicting (308) whether the SACCH block will be successfully decoded at the mobile unit (120); and
if the prediction shows that the SACCH block will not be successfully decoded, signaling the base station (110) with multiple disconnect messages, wherein the disconnect messages are Layer 2 disconnect messages or Layer 3 disconnect messages.

8. The method according to claim 7, wherein a first Layer 2 disconnect message or a first Layer 3 disconnect message is transmitted by the mobile unit (120) prior to the last burst in the SACCH block and a second Layer 2 disconnect message or a second Layer 3 disconnect message is transmitted by the mobile unit (120) after the last burst in the SACCH block.

9. A mobile unit (120), comprising:
a counter (230) that is configured to determine that a downlink channel failure has occurred during a call between the mobile unit (120) and a base station (110); and
a processor (220), wherein the processor (220) is coupled to the counter (230), and the processor (220) is operable to - in response to the downlink channel failure detection by the counter (230) - generate a disconnect message to be transmitted to the base station (110) that will inform the base station (110) of the downlink channel failure such that the base station (110) can detect the failure while avoiding undergoing a base station timeout procedure.

10. The mobile unit according to claim 9, further comprising a prediction engine (240) that is coupled to the processor (220) and that is operable to:
monitor one or more bursts of a SACCH block in the downlink channel; and
based on the monitoring, predict whether the SACCH block will be successfully decoded by the mobile unit (120), wherein the processor (220) is further operable to generate a prediction disconnect message in addition to the disconnect message if the prediction engine predicts that the SACCH block will not be successfully decoded.

11. The mobile unit according to claim 10, further comprising a transceiver (210) that is coupled to the processor (220), wherein the disconnect message is a Layer 2 disconnect message that the transceiver (210) is arranged to transmit to the base station (110) following the last burst in the SACCH block and wherein the prediction disconnect message is a Layer 3 disconnect message that the transceiver (210) is arranged to transmit to the base station (110) prior to the last burst in the SACCH block and wherein the mobile unit (120) operates in accordance with the GSM standard.

12. The mobile unit according to claim 11, wherein the SACCH block is the last SACCH block of a number of SACCH blocks that have not been successfully decoded by the mobile unit (120).

13. The mobile unit according to claim 10, wherein if the prediction engine (240) predicts that the SACCH block will be successfully decoded, the processor (220) will not generate the prediction disconnect message, wherein if the SACCH block is unsuccessfully decoded and the prediction engine (240) makes an incorrect prediction, the processor (220) will generate the disconnect message for transmission to the base station (110).

14. The mobile unit according to claim 9, further comprising a prediction engine (240) that is operable to:
monitor one or more bursts in a SACCH block in the downlink channel;
based on monitoring the bursts, predict whether the SACCH block will be successfully decoded at the mobile unit (120);
if the prediction shows that the SACCH will not be successfully decoded, signal the processor (220) to generate multiple disconnect messages for transmission to the base station (110), wherein the disconnect messages are Layer 2 disconnect messages or Layer 3 disconnect messages.

15. The mobile unit according to claim 14, further comprising a transceiver (210), wherein the transceiver (210) is arranged to transmit to the base station (110) a first Layer 2 disconnect message or a first Layer 3 disconnect message before the last burst in the SACCH block and a second Layer 2 disconnect message or a second Layer 3 disconnect message after the last burst in the SACCH block.

## Patentansprüche

1. Verfahren für einen Trennvorgang, das folgendes aufweist:
während eines Anrufs bei einer mobilen Einheit (120), Erfassen (302) durch die mobile Einheit (120) eines Downlink-Kanal-Versagens zwischen der mobilen Einheit (120) und einer Basisstation (110);
ansprechend auf die Erfassung des Downlink-Kanal-Versagens, Senden einer Trennnachricht von der mobilen Einheit (120) an die Basisstation (110), wobei die Trennnachricht so ausgestaltet ist, dass sie die Basisstation (110) über das Downlink-Kanal-Versagen informiert, so dass die Basisstation (110) das Downlink-Kanal-Versagen erfasst, während sie vermeidet, sich einem Basisstations-Zeitüberschreitungsvorgang zu unterziehen.

2. Verfahren nach Anspruch 1, das des Weiteren folgendes aufweist:
an der mobilen Einheit (120), Überwachen (306) von einem oder mehreren Bursts (420) eines langsamen zugehörigen Steuerkanal-(SACCH)Blocks (410) in dem Downlink-Kanal;
basierend auf dieser Überwachung, Vorausberechnen (308), ob der SACCH-Block erfolgreich an der mobilen Einheit (120) dekodiert werden wird; und
wenn die Vorausberechnung zeigt, dass der SACCH-Block nicht erfolgreich dekodiert werden wird, Senden (310) einer Vorausberechnungs-Trennnachricht an die Basisstation (110) zusätzlich zu der Trennnachricht.

3. Verfahren nach Anspruch 2, wobei die Trennnachricht eine Layer 2-Trennnachricht ist, die die mobile Einheit (120) an die Basisstation (110) nach dem letzten Burst (420) des SACCH-Blocks (410) sendet, und wobei die Vorausberechnungs-Trennnachricht eine Layer 3-Trennnachricht ist, die die mobile Einheit (120) an die Basisstation (110) vor dem letzten Burst (420) des SACCH-Blocks (410) sendet, und wobei die mobile Einheit (120) gemäß dem Global System for Mobile Communications(GSM)-Standard operiert.

4. Verfahren nach Anspruch 3, wobei der SACCH-Block der letzte SACCH-Block einer Sequenz an SACCH-Blöcken ist, deren erfolgreiche Dekodierung fehlgeschlagen ist.

5. Verfahren nach Anspruch 2, wobei, wenn die Vorausberechnung zeigt, dass der SACCH-Block erfolgreich dekodiert wird, die mobile Einheit (120) dann die Vorausberechnungs-Trennnachricht nicht senden wird, wobei, wenn der SACCH-Block in der Tat im Anschluss an die Vorausberechnung, dass der SACCH-Block erfolgreich dekodiert werden wird, erfolglos dekodiert wird, die mobile Einheit (120) die Trennnachricht an die Basisstation (110) sendet.

6. Verfahren nach Anspruch 5, wobei die Trennnachricht eine Layer 2-Trennnachricht ist.

7. Verfahren nach Anspruch 1, das des Weiteren folgendes aufweist:
an der mobilen Einheit (120), Überwachen (306) von einem oder mehreren Bursts (420) in einem SACCH-Block (410) in dem Downlink-Kanal;
basierend auf dieser Überwachung, Vorausberechnen (308), ob der SACCH-Block erfolgreich an der mobilen Einheit (120) dekodiert werden wird; und
wenn die Vorausberechnung zeigt, dass der SACCH-Block nicht erfolgreich dekodiert werden wird, Senden von mehreren Trennnachrichten an die Basisstation (110), wobei die Trennnachrichten Layer 2-Trennnachrichten oder Layer 3-Trennnachrichten sind.

8. Verfahren nach Anspruch 7, wobei eine erste Layer 2-Trennnachricht oder eine erste Layer 3-Trennnachricht von der mobilen Einheit (120) übertragen wird, vor dem letzten Burst in dem SACCH-Block, und eine zweite Layer 2-Trennnachricht oder eine zweite Layer 3-Trennachricht von der mobilen Einheit (120) übertragen wird, nach dem letzten Burst in dem SACCH-Block.

9. Mobile Einheit (120), die folgendes aufweist:
einen Zähler (230), der so ausgestaltet ist, dass er ermittelt, dass ein Downlink-Kanal-Versagen während eines Anrufs zwischen der mobilen Einheit (120) und einer Basisstation (110) aufgetreten ist; und
einen Prozessor (220), wobei der Prozessor (220) an den Zähler (230) gekoppelt ist, und wobei der Prozessor (220) - ansprechend auf die Erfassung des Downlink-Kanal-Versagens durch den Zähler (230) - zur Erzeugung einer Trennnachricht zur Übertragung an die Basisstation (110) operierbar ist, die die Basisstation (110) über das Downlink-Kanal-Versagen informieren wird, so dass die Basisstation (110) das Versagen erfassen kann, während sie vermeidet, sich einem Basisstations-Zeitüberschreitungsvorgang zu unterziehen.

10. Mobile Einheit nach Anspruch 9, die des Weiteren eine Vorausberechnungsmaschine (240) aufweist, die an den Prozessor (220) gekoppelt ist und die operiert werden kann zum:
Überwachen von einem oder mehreren Bursts eines SACCH-Blocks in dem Downlink-Kanal; und
basierend auf der Überwachung, Vorausberechnen, ob der SACCH-Block erfolgreich von der mobilen Einheit (120) dekodiert werden wird, wobei der Prozessor (220) des Weiteren zur Erzeugung einer Vorausberechnungs-Trennnachricht operiert werden kann, zusätzlich zu der Trennnachricht, wenn die Vorausberechnungsmaschine vorausberechnet, dass der SACCH-Block nicht erfolgreich dekodiert werden wird.

11. Mobile Einheit nach Anspruch 10, die des Weiteren einen Sendeempfänger (210) aufweist, der an den Prozessor (220) gekoppelt ist, wobei die Trennnachricht eine Layer 2-Trennnachricht ist, die der dementsprechend ausgestaltete Sendeempfänger (210) an die Basisstation (110) überträgt, im Anschluss an den letzten Burst in dem SACCH-Block und wobei die Vorausberechnungs-Trennnachricht eine Layer 3-Trennnachricht ist, die der dementsprechend ausgestaltete Sendeempfänger (210) an die Basisstation (110) überträgt, vor dem letzten Burst in dem SACCH-Block, und wobei die mobile Einheit (120) gemäß dem GSM-Standard operiert.

12. Mobile Einheit nach Anspruch 11, wobei der SACCH-Block der letzte SACCH-Block einer Anzahl an SACCH-Blöcken ist, die nicht erfolgreich von der mobilen Einheit (120) dekodiert wurden.

13. Mobile Einheit nach Anspruch 10, wobei, wenn die Vorausberechnungsmaschine (240) vorausberechnet, dass der SACCH-Block erfolgreich dekodiert werden wird, der Prozessor (220) keine Vorausberechnungs-Trennnachricht erzeugen wird, wobei, wenn der SACCH-Block erfolglos dekodiert wird und die Vorausberechnungsmaschine (240) eine inkorrekte Vorausberechnung macht, der Prozessor (220) die Trennnachricht für die Übertragung an die Basisstation (110) erzeugen wird.

14. Mobile Einheit nach Anspruch 9, die des Weiteren eine Vorausberechnungsmaschine (240) aufweist, die operiert werden kann zum:
Überwachen von einem oder mehreren Bursts in einem SACCH-Blocks in dem Downlink-Kanal; und
basierend auf der Überwachung der Bursts, Vorausberechnen, ob der SACCH-Block erfolgreich von der mobilen Einheit (120) dekodiert werden wird;
wenn die Vorausberechnung zeigt, dass der SACCH nicht erfolgreich dekodiert werden wird, Senden eines Signals an den Prozessor (220) zur Erzeugung von mehreren Trennnachrichten für die Übertragung an die Basisstation (110), wobei die Trennnachrichten Layer 2-Trennnachrichten oder Layer 3-Trennnachrichten sind.

15. Mobile Einheit nach Anspruch 14, die des Weiteren einen Sendeempfänger (210) aufweist, wobei der Sendeempfänger (210) so ausgestaltet ist, dass er an die Basisstation (110) eine erste Layer 2-Trennnachricht oder eine erste Layer 3-Trennnachricht überträgt, vor dem letzten Burst in dem SACCH-Block, und eine zweite Layer 2-Trennnachricht oder eine zweite Layer 3-Trennnachricht nach dem letzten Burst in dem SACCH-Block.

## Revendications

1. Procédé pour une procédure de déconnexion, consistant à:
pendant un appel au niveau d'une unité mobile (120), détecter (302), par l'unité mobile (120), une défaillance de canal de liaison descendante entre l'unité mobile (120) et une station de base (110);
en réponse à la détection de défaillance de canal de liaison descendante, envoyer par l'unité mobile (120) à la station de base (110) un message de déconnexion en tant que signalisation, dans lequel le message de déconnexion est configuré pour informer la station de base (110) de la défaillance de canal de liaison descendante de sorte que la station de base (110) puisse détecter la défaillance de canal de liaison descendante tout en évitant de subir une procédure de dépassement de délai de station de base.

2. Procédé selon la revendication 1, consistant en outre à:
au niveau de l'unité mobile (120), surveiller (306) une ou plusieurs salves (420) d'un bloc de canal de contrôle associé lent (SACCH) (410) dans le canal de liaison descendante;
sur la base de cette surveillance, prédire (308) si le bloc de SACCH sera décodé avec succès au niveau de l'unité mobile (120); et
si la prédiction montre que le bloc de SACCH ne sera pas décodé avec succès, envoyer (310) à la station de base (110) un message de déconnexion de prédiction en plus du message de déconnexion en tant que signalisation.

3. Procédé selon la revendication 2, dans lequel le message de déconnexion est un message de déconnexion de couche 2 que l'unité mobile (120) envoie à la station de base (110) après la salve finale (420) du bloc de SACCH (410) et le message de déconnexion de prédiction est un message de déconnexion de couche 3 que l'unité mobile (120) envoie à la station de base (110) avant la salve finale (420) du bloc de SACCH (410), et dans lequel l'unité mobile (120) fonctionne selon la norme GSM (Global System for Mobile Communications).

4. Procédé selon la revendication 3, dans lequel le bloc de SACCH est le dernier bloc de SACCH d'une séquence de blocs de SACCH qui n'ont pas été décodés avec succès.

5. Procédé selon la revendication 2, dans lequel, si la prédiction montre que le bloc de SACCH sera décodé avec succès, alors l'unité mobile (120) n'enverra pas le message de déconnexion de prédiction, dans lequel, si le bloc de SACCH n'est en fait pas décodé avec succès à la suite de la prédiction du fait que le bloc de SACCH devait être décodé avec succès, l'unité mobile (120) envoie le message de déconnexion à la station de base (110).

6. Procédé selon la revendication 5, dans lequel le message de déconnexion est un message de déconnexion de couche 2.

7. Procédé selon la revendication 1, consistant en outre à:
au niveau de l'unité mobile (120), surveiller (306) une ou plusieurs salves (420) dans un bloc de SACCH (410) dans le canal de liaison descendante;
sur la base de cette surveillance, prédire (308) si le bloc de SACCH sera décodé avec succès au niveau de l'unité mobile (120); et
si la prédiction montre que le bloc de SACCH ne sera pas décodé avec succès, envoyer à la station de base (110) de multiples messages de déconnexion en tant que signalisation, dans lequel les messages de déconnexion sont des messages de déconnexion de couche 2 ou des messages de déconnexion de couche 3.

8. Procédé selon la revendication 7, dans lequel un premier message de déconnexion de couche 2 ou un premier message de déconnexion de couche 3 est transmis par l'unité mobile (120) avant la dernière salve dans le bloc de SACCH et un deuxième message de déconnexion de couche 2 ou un deuxième message de déconnexion de couche 3 est transmis par l'unité mobile (120) après la dernière salve dans le bloc de SACCH.

9. Unité mobile (120), comprenant:
un compteur (230) qui est configuré pour déterminer qu'une défaillance de canal de liaison descendante s'est produite pendant un appel entre l'unité mobile (120) et une station de base (110); et
un processeur (220), dans laquelle le processeur (220) est couplé au compteur (230), et le processeur (220) peut être utilisé pour, en réponse à la détection de défaillance de canal de liaison descendante par le compteur (230), générer un message de déconnexion à transmettre à la station de base (110) qui informera la station de base (110) de la défaillance de canal de liaison descendante de sorte que la station de base (110) puisse détecter la défaillance tout en évitant de subir une procédure de dépassement de délai de station de base.

10. Unité mobile selon la revendication 9, comprenant en outre un moteur de prédiction (240) qui est couplé au processeur (220) et qui peut être utilisé pour:
surveiller une ou plusieurs salves d'un bloc de SACCH dans le canal de liaison descendante; et
sur la base de la surveillance, prédire si le bloc de SACCH sera décodé avec succès par l'unité mobile (120), dans laquelle le processeur (220) peut en outre être utilisé pour générer un message de déconnexion de prédiction en plus du message de déconnexion si le moteur de prédiction prédit que le bloc de SACCH ne sera pas décodé avec succès.

11. Unité mobile selon la revendication 10, comprenant en outre un émetteur-récepteur (210) qui est couplé au processeur (220), dans laquelle le message de déconnexion est un message de déconnexion de couche 2 que l'émetteur-récepteur (210) est agencé pour transmettre à la station de base (110) à la suite de la dernière salve dans le bloc de SACCH, et dans laquelle le message de déconnexion de prédiction est un message de déconnexion de couche 3 que l'émetteur-récepteur (210) est agencé pour transmettre à la station de base (110) avant la dernière salve dans le bloc de SACCH, et dans laquelle l'unité mobile (120) fonctionne selon la norme GSM.

12. Unité mobile selon la revendication 11, dans laquelle le bloc de SACCH est le dernier bloc de SACCH d'un nombre de blocs de SACCH qui n'ont pas été décodés avec succès par l'unité mobile (120).

13. Unité mobile selon la revendication 10, dans laquelle, si le moteur de prédiction (240) prédit que le bloc de SACCH sera décodé avec succès, le processeur (220) ne génèrera pas le message de déconnexion de prédiction, dans laquelle, si le bloc de SACCH n'est pas décodé avec succès et que le moteur de prédiction (240) effectue une prédiction incorrecte, le processeur (220) générera le message de déconnexion pour une transmission à la station de base (110).

14. Unité mobile selon la revendication 9, comprenant en outre un moteur de prédiction (240) qui peut être utilisé pour:
surveiller une ou plusieurs salves dans un bloc de SACCH dans le canal de liaison descendante;
sur la base de la surveillance des salves, prédire si le bloc de SACCH sera décodé avec succès au niveau de l'unité mobile (120);
si la prédiction montre que le bloc de SACCH ne sera pas décodé avec succès, signaler au processeur (220) de générer de multiples messages de déconnexion pour une transmission à la station de base (110), dans laquelle les messages de déconnexion sont des messages de déconnexion de couche 2 ou des messages de déconnexion de couche 3.

15. Unité mobile selon la revendication 14, comprenant en outre un émetteur-récepteur (210), dans laquelle l'émetteur-récepteur (210) est agencé pour transmettre à la station de base (110) un premier message de déconnexion de couche 2 ou un premier message de déconnexion de couche 3 avant la dernière salve dans le bloc de SACCH et un deuxième message de déconnexion de couche 2 ou un deuxième message de déconnexion de couche 3 après la dernière salve dans le bloc de SACCH.
